**Europäisches Patentamt**

**European Patent Office**

**Office européen des brevets**

(11) Veröffentlichungsnummer: **0 020 809**
**A1**

# EUROPÄISCHE PATENTANMELDUNG

(21) Anmeldenummer: **79102234.6**

(22) Anmeldetag: **03.07.79**

(51) Int. Cl.³: **H 01 H 35/34,** B 60 C 23/04,
G 01 L 17/00

(43) Veröffentlichungstag der Anmeldung: **07.01.81**
**Patentblatt 81/1**

(84) Benannte Vertragsstaaten: **DE FR GB IT NL SE**

(71) Anmelder: **Kienzle Apparate GmbH,**
**Heinrich-Hertz-Strasse Postfach 1650,**
**D-7730 Villingen-Schwenningen (DE)**

(72) Erfinder: **Hengstler, Rolf, Pestalozzistrasse 65,**
**D-7220 Villingen-Schwenningen (DE)**

(54) **Druckschalter zur Verwendung bei Reifendruckwarnanlagen.**

(57) Der Druckschalter (2) arbeitet mit einer Metallmembran (19), die einerseits dem Innendruck des Reifens, andererseits dem äußeren Normaldruck ausgesetzt ist. Dabei wirkt die Membran (19) gleichzeitig als Feder, die die Gegenkraft zum Innendruck des Reifens liefert und die den einen Kontakt (27) des Schalters trägt. Der andere Kontakt (18) ist zur Anpassung an die verschiedenen Ansprechdrücke der Reifen einstellbar im Schaltergehäuse angeordnet.

29.06.1979
o7o pa zw
Akte 1664

## Druckschalter zur Verwendung bei Reifendruckwarnanlagen

Die Erfindung bezieht sich auf einen Druckschalter zur Verwendung bei Reifendruckwarnanlagen, bei dem der Luftdruck im Reifen die eine Seite einer beweglichen Metallmembran beaufschlagt, wobei durch die Membran ein Paar elektrische Kontakte bei richtigem Reifendruck geschlossen gehalten werden, die bei Nachlassen des Druckes im Reifen durch die Bewegung der Membran öffnen.

Es sind eine Vielzahl von Druckschaltern für Reifendruckwarnanlagen bekannt, bei denen der Reifendruck auf eine Membran aus einem Elastomer, beispielsweise Gummi, einwirkt, die ihrerseits einen Stössel bewegt, der die eigentlichen Kontakte betätigt. Der eine Kontakt des Kontaktpaares ist dabei normalerweise an dem beweglichen Stössel angebracht, während der andere Kontakt des Paares mit einstellbarer Vorspannung im Gehäuse angeordnet ist. Die Vorspannung wird normalerweise geliefert von einer Spiralfeder, die gleichzeitig die Gegenkraft zum Reifendruck bildet, die also die Gummimembran bei normalem Reifendruck in einer definierten Position hält. Die Einstellbarkeit der Vorspannung ist erforderlich, um den Schalter den verschiedenen Nenndrücken der Reifen anzupassen.

Die Verwendung einer Gummimembran hat sich als nicht sehr vorteilhaft herausgestellt, insbesondere weil die Elastizität dieser Gummimembran stark temperaturabhängig ist. Es muß in diesem Zusammenhang darauf hingewiesen werden, daß der Druckschalter selbstverständlich bei sehr niedrigen Temperaturen von bis -40$^{\circ}$ bis hinauf zu hohen Temperaturen bei +70$^{\circ}$ gei gleichem Druck sicher funktionieren soll. Da die Gummimembran jedoch bei niedrigen Temperaturen eine sehr viel geringere Elastizität hat als

-2-

bei höheren Temperaturen, hängt der Schaltpunkt dann nicht mehr nur von dem effektiven Reifendruck sondern auch von der Außentemperatur und von der Temperatur, die der Reifen selbst bzw. seine Luftfüllung angenommen hat, ab. Ein genauer Schaltpunkt über den gesamten Temperaturbereich ist daher mit einer Gummimembran nicht zu erzielen.

Hinzu kommt, daß als Variable in die Schaltgenauigkeit nicht nur der Temperaturgang in der Elastizität der Gummimembran eingeht, sondern auch noch die Kennlinie der Feder, die die einstellbare Gegenkraft zum Reifendruck liefert. Eine genaue Justierung dieser Federkraft ist daher eine wesentliche Maßnahme im Rahmen der Fertigung der genannten Druckschalter, und diese Justierung ist mit nicht unerheblichem Aufwand verbunden.

Aus der DE-OS 23 36 762 ist auch schon ein Druckschalter bekannt, bei dem eine Metallmembran Verwendung findet, die zwischen dem Innenraum des Reifens einerseits und einer Druckkapsel andererseits angeordnet ist. Die Druckkapsel selbst wird in den Innenraum des Reifens eingeführt und ist mit einem Gas gefüllt, welches auf die Membran von der Innenseite her eine Kraft ausübt, die etwa dem Ansprechdruck des Druckschalters entsprechen soll. Im Innern der Druckkapsel befindet sich eine recht komplizierte Kontaktanordnung, die beim Nachlassen des Innendruckes des Reifens betätigt wird, um ein Signal zu geben. Die Fertigung der Druckschalter gemäß dieser Schutzrechtsanmeldung ist mit einigem Aufwand verbunden. Vor dem Einführen des Druckschalters in den Reifen durch eine Ausnehmung in der Felge muß die Druckkapsel mit dem Gas gefüllt werden, welches die Gegenkraft zum Reifeninnendruck liefert. Dabei muß genau gemessen werden, ob der Innendruck der Kapsel nun mit dem Ansprechdruck des Reifens übereinstimmt, und alsdann muß die Kapsel luftdicht verschlossen werden. Ebenso schwierig wie das Erzeugen des richtigen Ansprechdruckes in der Kapsel dürfte die Justierung der in der Kapsel angeordneten, sehr komplizierten Federanordnung, die die eigentliche Kontaktgabe bewirkt, sein.

Bei einer weiteren bekannten Anordnung (DE-OS 26 17 448) findet ebenfalls eine Metallmembran als Druckschalter für Reifendruckwarnanlagen Verwendung. Hier ist die Metallmembran in ein Gehäuseteil eingebettet, so daß sie den oberen Abschluß eines Hohlraumes dieses Schaltergehäuseteiles bildet. Verwendung finden soll dieser Druckschalter insbesondere bei Reifen mit Schlauch. Das Schaltergehäuse soll in die Felge eingebettet werden, und der Schlauch soll bei richtigem Luftdruck im Innenraum des Schlauches die Metallmembran durchdrücken, derart daß sie mit einem am Boden des Schaltergehäuses fest angeordneten Gegenkontakt in Berührung kommt. Beim Nachlassen des Druckes im Innenraum des Schlauches wird davon ausgegangen, daß sich ein höherer Druck zwischen dem Schlauch und der Felge aufbaut und daß hierdurch die Metallmembran nach außen gedrückt wird und damit der Kontakt sich öffnet. Die Funktionssicherheit dieser Anordnung muß bezweifelt werden. Zum einen ist es nicht absolut sicher, daß der Schlauch sich beim Aufpumpen immer in die Vertiefung des Schaltergehäuses hineinlegt, so daß mit Sicherheit ein entsprechender Kontaktschluß erfolgt. Zum anderen ist es auch unmöglich, bei dieser Anordnung den Ansprechdruck, bei dem also der Schalter beim Nachlassen des Druckes im Innenraum des Reifens ein Signal abgibt, in irgendeiner Form genau einzustellen.

Gegenstand der Erfindung ist demgegenüber ein Druckschalter, bei dem auch eine Metallmembran Verwendung findet, die jedoch hier so verwendet wird, daß sich ein möglichst einfacher Aufbau des Schalters mit einer geringstmöglichen Anzahl von Teilen bei gleichzeitig hoher Schaltgenauigkeit und geringer Temperaturabhängigkeit ergibt. Der erfindungsgemäße Druckschalter ist dadurch gekennzeichnet, daß die Metallmembran die Funktion nicht nur des luftdichten Abschließens des Innenraumes des Reifens gegenüber dem äußeren Normaldruck übernimmt, sondern gleichzeitig auch an sich die Gegenkraft zum Reifendruck bildet, wobei an der Membran der eine Kontakt befestigt ist, während der andere Kontakt des Paares mit einstellbarem Abstand im Schaltergehäuse angeordnet ist.

Ein Schalter gemäß der Erfindung kann sehr klein und mit der geringstmöglichen Anzahl von Teilen gebaut werden und ist gleichzeitig funktionssicher. Die kleine Bauweise hat den Vorteil, daß das Gewicht des Schalters den Reifen nur unwesentlich belastet, so daß irgendwelche Unwuchten durch den Schalter in den Reifen nicht hineingebracht werden. Die geringe Anzahl von Teilen bedeutet gleichzeitig eine Reduzierung nicht nur des Aufwandes in sachlicher Hinsicht sondern auch eine vereinfachte Montagemöglichkeit.

Durch den Verzicht auf eine besondere, die Gegenkraft zum Reifendruck liefernde Feder verbessert sich auch die Einstellbarkeit des Druckschalters auf den Ansprechdruck, indem bei der erfindungsgemäßen Anordnung die Metallmembran die Funktion des luftdichten Abschließens des Innenraumes des Reifens und gleichzeitig die Funktion der Gegenkraft gegen den Innendruck des Reifens übernimmt. Eingestellt zu werden brauchen dann nur noch die Kontaktabstände, indem man bei der Montage die Metallmembran von der Innenseite her mit einem Druck beaufschlagt, der dem Ansprechdruck entspricht, und die Kontakte so einstellt, daß sie in dieser Stellung gerade öffnen. Wenn man die Stellung der Kontakte durch eine Gußmasse festlegt, ist der Schalter geeicht und bedarf keiner besonderen Überwachung mehr. Er ist auch relativ unempfindlich in seiner Handhabung beim Transport zum Kunden und beim Einbau.

Bei Wahl einer Metallmembran mit entsprechenden Abmessungen hinsichtlich ihres Durchmessers und hinsichtlich ihrer Materialstärke ist es sogar möglich, den gesamten Nenndruckbereich aller gängigen LKW-Reifen zwischen 5 bis 9 bar mit nur einer Membran abzudecken, die dann eine praktisch lineare Kennlinie aufweist, so daß zur Anpassung an die verschiedenen Nenndrucke der Reifen lediglich der Kontaktabstand der Einstellung bedarf.

Ein weiterer Vorteil des erfindungsgemäßen Druckschalters ist, daß er einerseits bei schlauchlosen Reifen direkt in die Felge eingesetzt werden kann, daher unmittelbar mit dem Innendruck des Reifens beaufschlagt werden kann, oder aber auch zur Kombination mit einem Reifenventil gebaut werden kann, derart daß mit geringfügiger Anpassung der gleiche Druckschalter einerseits für die Erstausrüstung Verwendung finden kann, andererseits aber auch sowohl bei Reifen mit Schlauch als auch im Nachrüstgeschäft mit dem normalerweise schon vorhandenen Einlaßventil des Reifens kombiniert werden kann.

Weitere Einzelheiten der erfindungsgemäßen Anordnung ergeben sich anhand der detaillierten Beschreibung zweier Ausführungsbeispiele, die in den beiliegenden Zeichnungen dargestellt sind.

Figur 1 ist eine Ausführungsform des erfindungsgemäßen Druckschalters zum Einbau in die Felge,
Figur 2 ist eine Ausführungsform des Druckschalters zum Aufschrauben auf das Lufteinlaßventil der Reifen, während Figur 3 eine Übersichtsdarstellung der Anordnung des Druckschalters gemäß Figur 2 wiedergibt.

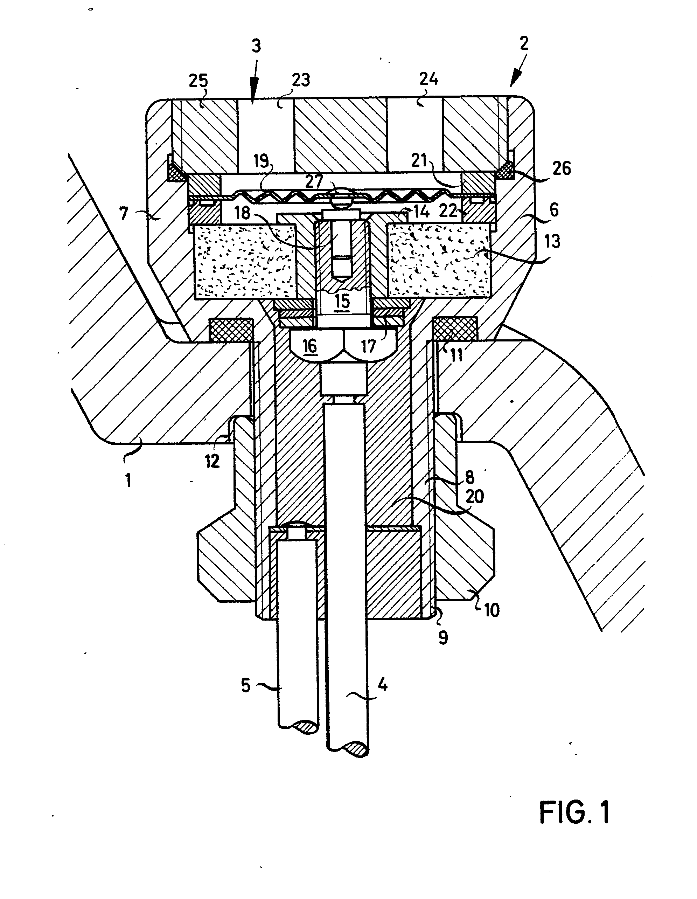

In Figur 1 erkennt man die Radfelge 1, in die der Druckschalter 2 eingesetzt ist. Der Innendruck des Reifens wirkt in Pfeilrichtung 3 auf den Druckschalter ein. Auf der anderen Seite des Druckschalters werden zwei Leitungen 4 und 5 herausgeführt, die an die Übertragungseinrichtung zur Übertragung der Signale ins Fahrerhaus angeschlossen sind. Grundsätzlich kann der Druckschalter mit jeder Art von Übertragungseinrichtung Verwendung finden. Vorzugsweise handelt es sich in aller Regel jedoch um eine induktive Übertragungseinrichtung, d.h. die beiden Leitungen 4 und 5 sind an eine Induktionsspule angeschlossen, während am Chassis des Fahrzeuges ein oder mehrere Gegenspulen angeordnet sind, in die die Signale induktiv übertragen werden, um die Signalgabe im Fahrerhaus zu melden.

Die Art der Übertragungseinrichtung ist beliebig. Selbstverständ-

-6-

lich ist es auch möglich, den erfindungsgemäßen Druckschalter ganz einfach mit einer Sichtanzeigevorrichtung in Form eines herausspringenden Knopfes oder dergl. zu versehen.

Der Schalter 2 besteht insgesamt aus einem Schaltergehäuse 6, welches in seinem in dem Inneraum des Reifens befindlichen Teil 7 erweitert ist, welches hingegen mit seinem nach außen durch die Felge hindurchtretenden Teil 8 mit einem Gewinde 9 versehen ist. Mit Hilfe des Gewindes 9 kann das Schaltergehäuse 6 mit Hilfe einer Mutter 10 in der Felge 1 festgeschraubt werden, wobei eine Dichtung 11 dafür sorgt, daß kein Druckausgleich zwischen dem Innenraum des Reifens und dem äußeren Normaldruck stattfinden kann.

Bei der Montage wird das Schaltergehäuse 6 von innen in die Felge eingeführt und dann durch Aufschrauben der Gegenmutter 10 an der Felge befestigt, die hierfür noch mit einer Ausnehmung 12 versehen ist. Es können dann die Leitungen 4 und 5 an die Radspule der Übertragungseinrichtung oder irgendeinen sonstigen Sichtanzeiger angeschlossen werden.

In das Innere des Teiles 7 des Schaltergehäuses 6 ist ein Isolierstoffteil 13 eingelegt. In das Isolierstoffteil 13 ist eine Metallbuchse 14 eingepreßt, die mit einem Innengewinde versehen ist. Ein Kontaktträger 15 ist in das Innengewinde der Metallbuchse 14 eingeschraubt. Der Kontaktträger 15 hat einen Sechskant 16. Mit Federringen 17 wird die Stellung des Kontaktträgers 15 in der Buchse 14 gesichert, so daß der Kontakt 18 seine einmal einjustierte Stellung beibehält, insbesondere dann, wenn der Innenraum des Teiles 8 des Schaltergehäuses mit einer Vergußmasse 20 ausgefüllt wird, so daß nachträgliche Veränderungen in der Stellung des Kontaktes 18 unmöglich gemacht werden. Die Metallmembran 19 ist zwischen zwei Spannringen 21 und 22 im Schaltergehäuse 6 fest eingespannt, indem von oben her ein Metalldeckel 25 in den Teil 7 des Schaltergehäuses 6 eingeschraubt wird. Öffnungen 23 und 24 in dem Deckel 25 sind vorge-

-7-

sehen, um einen einwandfreien Zutritt des Innendruckes des Reifens zu der Metallmembran 17 zu gewährleisten. Zwischen dem Deckel 25 und dem Teil 7 des Schaltergehäuses kann noch eine Dichtung 26 vorgesehen sein. Die Metallmembran 19 trägt den Gegenkontakt 27. Sie ist insbesondere als Wellmembran ausgebildet, wodurch die Membran einen größeren Kontakthub erhält.

In der in Fig. 1 gezeigten Stellung ist der Nenndruck des Reifens vorhanden, so daß der Kontakt 27 an der Metallmembran 19 den Gegenkontakt 18 am Kontaktträger 15 berührt. Läßt der Innendruck des Reifens aus welchen Gründen auch immer nach, dann öffnen die Kontakte 27 und 18, so daß über die Leitungen 4 und 5 ein entsprechendes Signal an die Übertragungsvorrichtung abgegeben wird.

Der in Fig. 1 gezeigte Druckschalter soll insbesondere Verwendung finden bei schlauchlosen Reifen und wird direkt in die Felge eingebaut. Er besteht nur aus ganz wenigen Teilen und ist daher sehr leicht zu bauen, so daß hierdurch keine wesentlichen Unwuchten in den Reifen hineingebracht werden. Bei der Montage des Druckschalters an sich wird dieser in eine entsprechende Vorrichtung eingesetzt und die Metallmembran 19 von der Oberseite mit dem Ansprechdruck, d.h. also mit dem Luftdruck beaufschlagt, bei dessen Vorliegen eine Signalgabe erfolgen soll. In dieser Stellung wird dann durch Drehen des Sechskantes 16 der Gegenkontakt 18 so eingestellt, daß die Kontakte 27 und 18 gerade öffnen. Dann wird der Hohlraum im Gehäuseteil 8 mit der Vergußmasse 20 ausgefüllt, der Schalter ist fertig geeicht und braucht nur noch, wie bereits oben beschrieben, in die Felge des Reifens eingebaut zu werden.

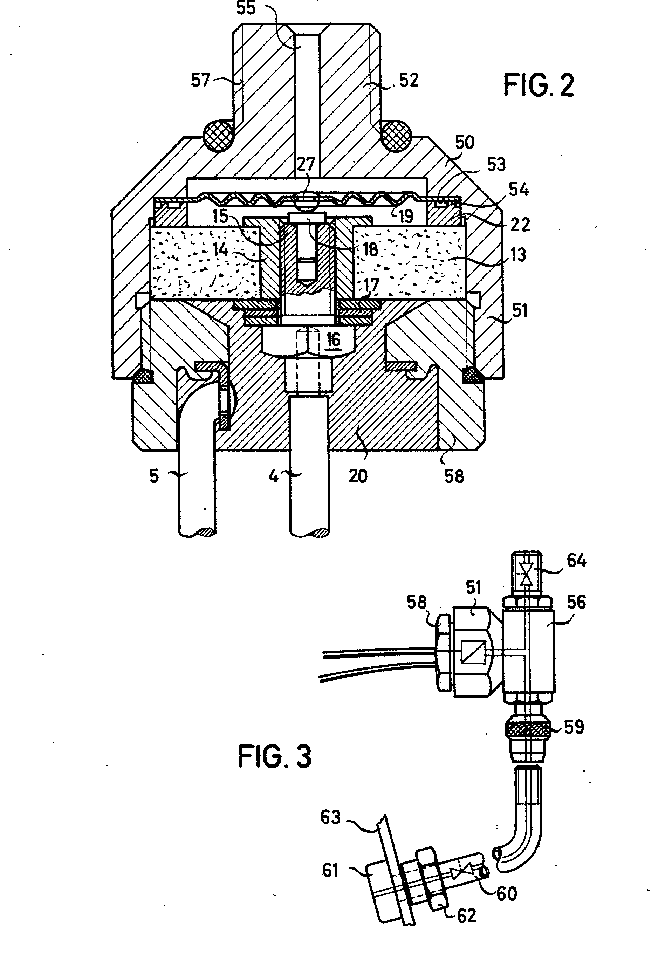

In Fig. 2 ist noch eine Ausführungsform des erfindungsgemäßen Schalters gezeigt, die entweder bei einem Reifen mit Schlauch Verwendung finden soll, oder die insbesondere dann angewendet werden soll, wenn es sich um ein Nachrüsten eines Reifens mit einem Druckschalter handelt. Diese Ausführungsform des erfindungsgemäßen Druckschalters ist dazu bestimmt, mit dem normalen Lufteinlaßventil des Reifens kombiniert werden zu können. Das Schaltergehäuse 50 besteht hier aus einem erweiterten Teil 51 und einem sich verjüngenden Teil 52, der mit einem Außengewinde 57 versehen ist. In den erweiterten Teil 51 ist die Metallmembran 19 mit dem Kontakt 27 eingelegt. Sie stützt sich an einer Schulter 53 des Gehäuses 50 ab und wird durch einen Metallring 22 festgehalten. Dieser Metallring ist im übrigen an seiner oberen Fläche mit Riefen 54 versehen. Diese Riefen haben die Aufgabe, eine bessere Abdichtung der Metallmembran 19 zu gewährleisten. In diesem Falle liegt nämlich der Ring 22 nur mit seinen Riefen 54 auf der Metallmembran auf, so daß hier ein größerer Anpreßdruck erzeugt werden kann, der auch eine bessere Abdichtung sicherstellt. Der Innendruck des Reifens wirkt über eine Öffnung 55 auf die Metallmembran 19 ein. Mit Hilfe des Außengewindes 57 am Gehäuseteil 52 kann der Druckschalter in eine 2-Wege-Kammer 56 (Fig. 3) eingeschraubt werden.

Mit Hilfe eines Deckels 58 kann der Schalter gemäß Fig. 2 nach außen verschlossen werden. Dieser Deckel 58 ist in den Teil 51 des Gehäuses 50 eingeschraubt und preßt das Isolierstoffteil 13 gegen den Ring 22 und damit auch gegen die Membran 19. Auch hier sind die Leitungen 4 und 5 mit den beiden Kontakten 18, 27 verbunden. Auch hier wird der Hohlraum des Deckels 58 mit einer Vergußmasse wie bei 20 ausgefüllt, um die einmal vorgenommene Eichung des Schalters festzulegen.

In Fig. 3 sieht man den Druckschalter gemäß Fig. 2 im eingebauten Zustand. An die Zwei-Wege-Kammer 56 ist nach oben der Ventilnippel 64 angeschlossen, über den der Reifen aufgepumpt wird. Mittels einer Überwurfmutter 59 ist von unten an die Zwei-Wege-Kammer 56 das Luftzuführrohr 60 angeschraubt, welches mittels eines Ansatzes 61 und einer weiteren Überwurfmutter 62 in der Felge 63 gehalten wird.

Patentansprüche:

1. Druckschalter zur Verwendung bei Reifendruckwarnanlagen, bei dem der Luftdruck im Reifen die eine Seite einer beweglichen Metallmembran (19) beaufschlagt, wobei durch die Membran ein Paar elektrische Kontakte (18, 27) bei richtigem Reifendruck geschlossen gehalten werden, die bei Nachlassen des Druckes im Reifen durch die Bewegung der Membran öffnen, dadurch gekennzeichnet, daß die Membran die Funktion nicht nur des luftdichten Abschließens des Innenraumes des Reifens gegenüber dem äußeren Normaldruck übernimmt, sondern gleichzeitig auch an sich die Gegenkraft zum Reifendruck bildet, wobei an der Membran der eine Kontakt (27) befestigt ist, während der andere Kontakt (18) des Paares mit einstellbarem Abstand im Schaltergehäuse (6, 50) angeordnet ist.

2. Druckschalter nach Anspruch 1, dadurch gekennzeichnet, daß die Membran (19) zur Abdichtung gegenüber dem Reifendruck mit Hilfe eines mit Riefen (54) versehenen Ringes (22) gegen eine Schulter (53) des Schaltergehäuses (50) gepreßt wird.

3. Druckschalter nach Anspruch 1, dadurch gekennzeichnet, daß der einstellbare Gegenkontakt (18) in einem Isolierstoffteil (13) im Schaltergehäuse gehalten ist.

4. Druckschalter nach Anspruch 1 und 3, dadurch gekennzeichnet, daß in dem Isolierstoffteil (13) eine Metallbuchse (14) mit Innengewinde vorgesehen ist, in der ein Kontaktträger (15) drehbar und damit in seinem Abstand vom Gegenkontakt (27) an der Membran (19) einstellbar angeordnet ist.

-2-

5. Druckschalter nach Anspruch 1,
   dadurch gekennzeichnet,
   daß das Schaltergehäuse (6) direkt in die Felge (1) eines
   schlauchlosen Reifens einbaubar ist.

6. Druckschalter nach Anspruch 1,
   dadurch gekennzeichnet,
   daß das Schaltergehäuse (50) mit dem Lufteinlaßventil des
   Reifens funktionell verbunden ist.

FIG. 1

- 2/2 -

FIG. 2

FIG. 3

**Europäisches Patentamt**

**EUROPÄISCHER RECHERCHENBERICHT**

Nummer der Anmeldung

EP 79 102 234.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 438 355 (INDUSTRIE PIRELLI S.P.A.)  * Seite 5, Absatz 4 bis Seite 6, Absätze 3; Seite 8, Absätze 1 und 2; Fig. 1 bis 3 *  -- | 1,3, 5 |
| | DE - A1 - 2 626 475 (SOCIETE INTER-NATIONALE DE MECANIQUE INDUSTRIELLE S.A.)  * Seite 7, Absatz 3 bis Seite 10, Absatz 2; Fig. 1 *  -- | 1,3, 4 |
| D,A | DE - A1 - 2 617 448 (MICHELIN & CIE)  * Ansprüche 1 und 2; Fig. 1 bis 2 *  -- | 1 |
| D,A | DE - A - 2 336 762 (RANCO CONTROLS S.P.A.)  * Ansprüche 1, 2 und 13; Fig. 4 bis 5 *  -- | 1 |
| A | DE - A - 2 217 011 (CLEGG JUN.)  * Seite 13, Absatz 2 bis Seite 14; Fig. 1 und 4 *  ---- | 6 |

**KLASSIFIKATION DER ANMELDUNG (Int.Cl.3)**

H 01 H 35/34
B 60 C 23/04
G 01 L 17/00

**RECHERCHIERTE SACHGEBIETE (Int. Cl.3)**

B 60 C 23/00
G 01 L 7/08
G 01 L 17/00
H 01 H 35/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-03-1980 | RÜPPERT |

EPA form 1503.1 06.78